# EUROPEAN PATENT APPLICATION

(11) **EP 1 657 217 A1**
(43) Date of publication of application: **17.05.2006**
(21) Application number: 05013026.9
(22) Date of filing: 16.06.2005
(51) Int. Cl.: C01F 11/24, C01F 11/30, C01F 11/32, C01B 9/02

(54) **Process for recovering calcium chloride from the purge of epichlorhydrine production**

(30) Priority: 10.11.2004 DE 102004054433
(71) Applicant: GEA Messo GmbH, 47229 Duisburg (DE)
(72) Inventor: Van Esch, Jan, 5616 RL Eindhoven (NL); Hofmann, Günter, 47259 Duisburg (DE); Plate, Hermann , Dr., 47447 Moers (DE)
(74) Representative: Stenger, Watzke & Ring

(57) **Abstract**

This invention relates to a process for recovering calcium chloride from a purge of epichlorhydrine production which is characterised in the subsequent steps pretreatment, pre-concentration and crude crystallisation and pure crystallisation.

## Description

This invention relates to a process for recovering calcium chloride from the purge of epichlorhydrine production.

Epichlorhydrine (ECH) as a pre-cursor for epoxide production is one of the most important products in plastic industry. During the production process of epichlorhydrine large amounts of chloride containing by-products like hydrogen chloride are obtained.

For environmental and economical reasons these by-products have to be removed or recycled.

This invention addresses the problem of removing chloride containing products in the purge of epichlorhydrine production by obtaining calcium chloride.

This problem is solved by a process with the features of claim 1.

The following embodiments are examples for the process while the invention is not limited to this embodiments.

### Brief description of the figures:

- Fig. 1: shows the process scheme for the pre-treatment unit of the inventive process.
- Fig. 2: shows the process scheme for the pre-concentration and crude crystallisation unit of the inventive process.
- Fig. 3: shows the process scheme for the pure crystallisation unit of the inventive process and the melting unit for obtaining CaCl₂ - flakes.
- Fig. 4: shows the process scheme for a flaking, calcination and packaging unit of the inventive process.
- Fig. 5: shows the process scheme for a purification unit of the inventive process to concentrate a purge stream containing the main part of glycerol and other organic impurities which are solidified by addition of burned lime.
- Fig. 6: shows an alternative process scheme for the pre-treatment unit of the inventive process.
- Fig. 7: shows an alternative process scheme for the pre-concentration unit of the inventive process.
- Fig. 8: shows an alternative process scheme for the crude crystallisation unit of the inventive process.
- Fig. 9: shows an alternative process scheme for the pure crystallisation unit of the inventive process.
- Fig. 10: shows an alternative process scheme for the granulation, sieving and air treatment unit according to the inventive process.
- Fig. 11: shows an alternative cooling and packing process scheme according to the inventive process.
- Fig. 12: shows an alternative cooling crystallisation process scheme according to the inventive process.

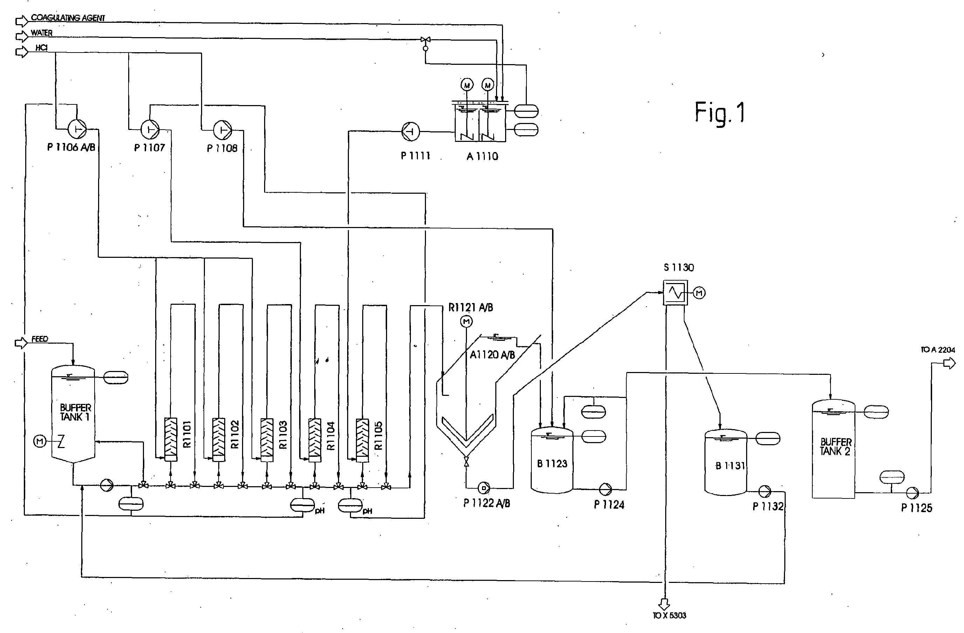

### (Fig. 1) Pre-treatment

As a first step in the process the non-reacted lime is converted to a large extent to calcium chloride. Because local overdosing immediately leads to dissolution of organic solids and colour formation a multi stage controlled acidification with static mixers R1101 to R1104 is used. The rack-mounted pipes between mixers will provide the necessary residence time. When the ECH plant is shut down, this reaction stage can be used to convert produced hydrochloric acid with 10-15 % lime to calcium chloride. This to enable continuation of other parts of the site.

Before the feed solution enters the tilted plate settlers A1120, a flocculent is added by means of the dosing pump P1111, prepared before in the dosing device A1110. The mixing takes place in R1105. With the help of the flocculent the settler forms the concentrated underflow suspension. In the settler some sludge storage capacity is provided. A stand by tilted plate separator is provided to ensure that one clarifier is always available before transferring the liquid to the buffer tanks.

The sludge is further thickened in decanter centrifuge S1130. The filtrate from the centrifuge is returned to the feed inlet. The sludge can either be transported to a landfill or be treated further. In case of further treatment in the solidification unit the sludge is transported sideways to the solidification unit using 2 conveyors.

The clarified overflow from A1120 is collected in the intermediate storage tank B1123. Here the pH of the solution is brought to neutral/slightly basic. From this tank the clear solution is given to the pre-concentration unit by using the solution pump P1124 and P1125. Buffer tank 2 is used for equalization of the flow and general buffer capacity for the calcium chloride recovery plant.

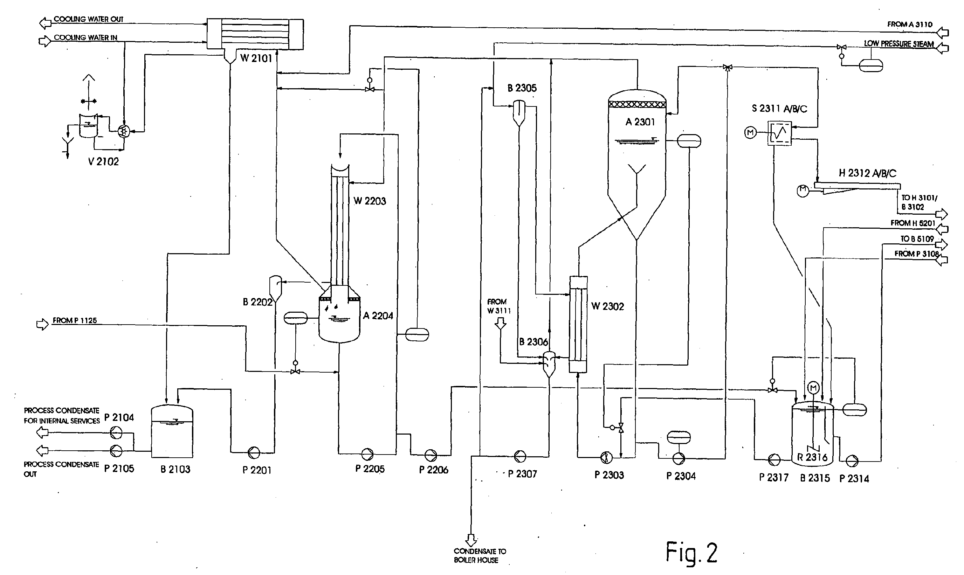

### (Fig. 2) Pre-concentration and crude crystallisation

The evaporation is a two-stage system. One of the stages is the pre-concentrator the other is the crude crystallisation unit. To ensure no gypsum precipitation occurs during pre-concentration this stage is operated at a low temperature. This allows us to feed the liquid without necessity for pre heating.

A falling film evaporator or equivalent is provided for the pre-concentration unit. It consists of the heat exchangers W2203, the vapour separator (with mesh) A2204, the circulation pump P2205 and the connecting circulation pipelines. The re-circulation will ensure a constant falling film thickness in the heat exchanger tubes if load conditions for the plant are varied.

In the evaporator liquid is evaporated during the falling down of the liquid film on the internal tube surfaces. Special distribution device on the heat exchanger top and sufficient liquid flow are foreseen to ensure the wetting of the heat exchanger surface. After leaving the heat exchanger, the mixture of vapour and droplet is entering the vapour separator equipped with mesh separator. The vapour is than guided to the condenser, driven by the condensation taking place there. The vapour condensate is collected in the condensate tank. The condensate is extracted liquor-level controlled by means of the condensate pump P2201 and given to the condensate storage tank B2103.

After the pre concentration, the solution is fed with pump P2206 to an intermediate tank B2316 in the crude crystallisation section.

The vapour is condensed on surface condenser W2101. From the condenser W2101 the vapour condensate is collected in the condensate tank B2103. Via the condensate pump P2105 the condensate is provided to the battery limit. A part of condensate is used within the plant for internal services like washing, seal flushing and dissolution of salt.

The vacuum for the evaporator is maintained using the water ring vacuum pump V2102. The non-condensable gases are vented to the atmosphere. Adding small quantity of atmospheric air controls the vacuum pressure.

In the intermediate tank B2316 the pre concentrated liquor is combined with the calcium chloride containing flow from the unit 5 (organics separation) and with the purge from the pure crystallisation. These flows are homogenised before feeding to the crystalliser. Sufficient volume hold-up for the intermediate tank is foreseen to ease the plant operation.

The mixed solution is fed to the single-effect crystalliser by liquor level-control. The crystalliser is of FC-type (forced circulated) and consists of the vapour separator A2301 with demister, the heat exchanger W2302, the circulation pump P2302 and the connecting re-circulation line. The circulation pump is designed to match the best re-circulation conditions for the heat exchange and the crystal growth.

The liquid passes the heat exchanger from the bottom, thereby taking up heat provided by the shell-side condensation of live steam (low pressure). The resulting steam condensate is collected in the condensate tank B2306 and finally returned to the boiler house via the heating steam condensate pump P2307. Part of the condensate is used to saturate the live steam. The remaining water droplets after steam saturation are separated in the droplet eliminator B2305 in order to avoid damage of the heater tubes.

The heating leads to the evaporation of water. Hence, the solution exceeds the saturation of CaCl₂ and the CaCl₂.2H₂O crystallises. The produced suspension is withdrawn by the slurry pump P2304 and directly fed to the centrifuges S2311. The mother liquor and wash liquors with the organic impurities are collected in the liquor tank B2313. A portion of this liquid is recycled to the unit 5 for the purification, what is not purged is mixed in tan B2315.

Crystallisation is an effective purification step, provided the separation between crystals and the mother liquor with the impurities is efficient. Special process design and centrifuge type are used to ensure the necessary crystal purity to meet the whiteness requirement for the flaked product processed by high temperature melting, flaking, high temperature calcination.

The vapour from the crude crystallisation is used to heat the pre concentration. Additional heat is recovered by flashing the steam condensates to the pressure of the main mass of vapour.

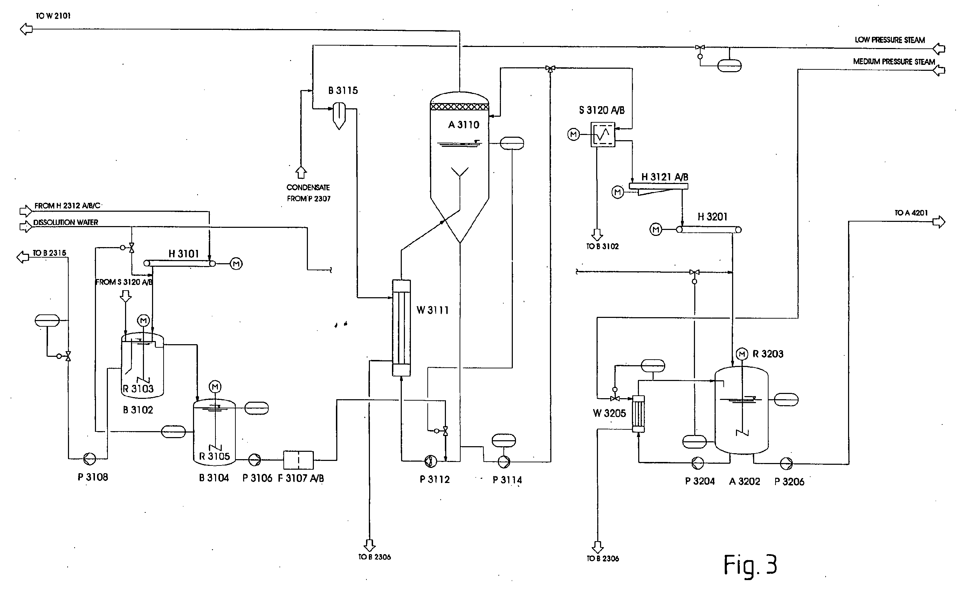

### (Fig. 3) Pure crystallisation

The separated and washed wet crystals are transported from the centrifuges S2311 and fall into the dissolution vessel B3102.

In the dissolution vessels B3102 and B3104 the crystals are dissolved in condensate and recycled mother liquor. The solution then enters the re-crystallisation. The re-crystallisation functions in exactly the same way as the crude crystallisation. The difference between the two stages is the feed composition. In the crude crystallisation all the impurities enter the crystallisation, in re-crystallisation crystals (=almost pure calcium chloride) with only a fraction of the impurities in the adhering mother liquor enter the crystallisation. This results in a reduction of the impurities with an order of magnitude.

### Option: Flakes 77 % as final product

### (Fig. 3) Melting

The separated and washed wet crystals leaving the re crystallisation are brought into the melting vessel A3202 in which melting takes place at elevated temperatures. The mother liquor and all the wash liquors are collected in a section of the liquor tank B3102. Part of this liquid is recycled to the feed of the crude crystallisation and the remainder flows to the bulk of the dissolution tank. The recycling of the mother liquor prevents a to high concentration of the crystals in crystalliser.

The melting device consists of the receiver vessel A3202, which also has the function of a buffer tank for the subsequently following process stages. By means of the solution pump P3206 the hot CaCl₂ melt is fed to the flaker A4101.

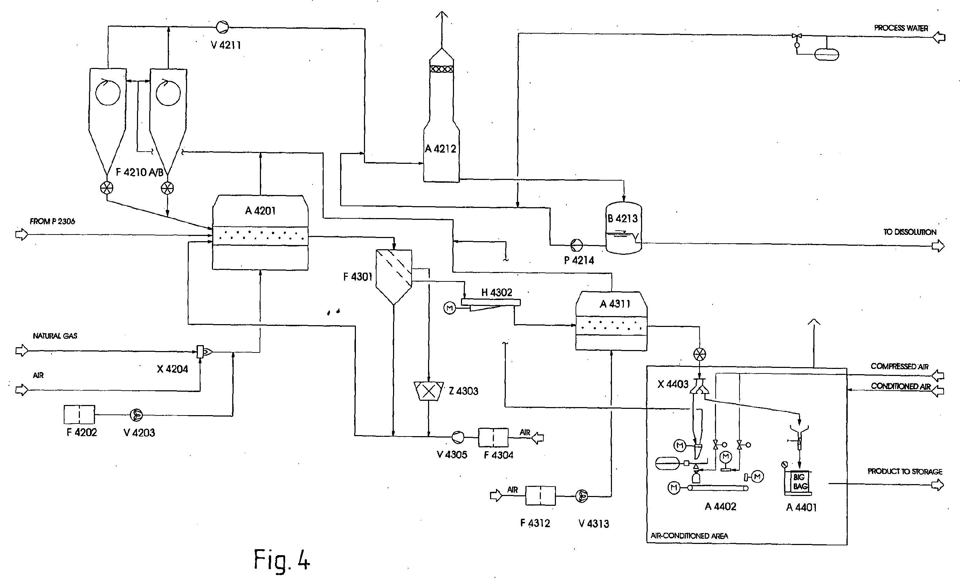

### (Fig. 4) Flaking, calcination and packaging

The melt is taken from P3206 and solidified on the cooled surface A4.01 by forming the calcium chloride hydrate.

The solidified CaCl₂.2H₂O and CaCl₂.4H₂O on the cooling belt are removed by a scraper system broken up and taken to the calcination device T4201.

This calciner is a drum drier heated with natural gas in which the flakes are calcined to approx. 77 - 80 % CaCl2 content (as a comparison: approximately 74,5 % CaCl₂ in CaCl₂.2H₂O).

The exhaust gas from the calciner is passing a cyclonic quench and a subsequently following wet washing to take out the dust. The solution from the wet scrubber is returned to the dissolution tank B3102.

After the calcination the product falls in the drum cooler W4301 in which the product is re-cooled to the desired final temperature by the means of cooling water.

### Option: granulated calcium chloride 95 % as final product

### Dissolution

The separated and washed wet crystals leaving the re-crystallisation are brought into the dissolution vessel B3202, where they are mixed with hot condensate. From this tank into the solution flows over in tank B3204 to ensure the residence time (distribution) is sufficient to allow complete dissolution of the crystals. The solution with 55-60 % calcium chloride is then transferred with high pressure pump P3206 to the injection system of the granulator.

In case at a later stage sales of liquid calcium chloride is desired it is easy to produce solutions, which are typically in a concentration of 30-40 %, from this concentrated calcium chloride tank.

### Granulation, cooling, sieving and air treatment

The solution from pump P2306 is injected in the high temperature fluidised bed granulator A4201. Here a complex process of agglomeration of fines and coating with thin layers of calcium chloride solution which grow to form rounded granules. In this process the granules are calcined to either 95 % calcium chloride or 80 % calcium chloride granules.

The exhaust gas from the fluid bed granulator is passing a cyclonic separator F4210 A/B and a subsequently following wet washing (A4212 & B4213 & P4214) to take out the finest dust. The solution from the wet scrubber is returned to the dissolution tank B3102. The solids from the cyclone are fed back to the fluidised bed.

The granules flowing out of the fluidised bed granulator flow into the vibratory fluidised bed cooler W4311. The air from the cooler serves to improve the heat transfer in the cooler. Most of the heat is removed with the indirect heat exchanger which is incorporated into the fluidised bed.

In the sieve F4301 the oversize and undersize granules are removed and the granules are sent to the packing. The oversize granules are ground in mill Z4303. The ground material and the undersize material are returned to the fluidised bed granulator.

### Packing

From this point on the process is again the same for both options.

The final product is transported to either an automatic Big Bag packing station A4401 or automatic bag packing and palletising system A4402.

Due to the hydroscopic character of the product the direct packaging without any intermediate silo storage is considered.

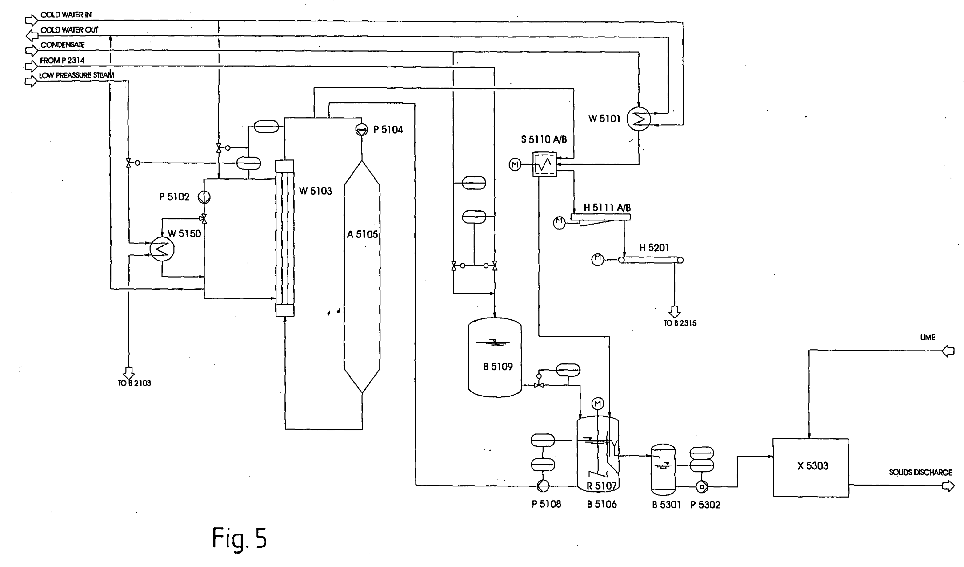

### (Fig. 5) Purification

Our research and development work performed in two periods since 1998 has in the end resulted in process using cooling crystallisation as after crystallisation that will give a high yield of calcium chloride and a simple stable operation using proven unit operations. The loss of calcium chloride based on this design is around 0,6 t/h per hour which is only about 11 % of the calcium chloride entering the evaporation.

The cooling crystallisation passes by the buffer tank B5109 and then enters mixing tank B5106. From there the liquid is transferred to the loop crystalliser. This unit consists of the heat exchanger W5103, circulation pump P5104 and crystalliser body A5105. The crystallisation is a surface cooling crystallisation. To reach the desired low temperature of 15 - 20 °C the heat exchanger is cooled with cold water. The crystals are separated in the centrifuges S5110 and the crystals are returned to the crude crystallisation.

A concentrated purge stream containing the main part of glycerol and other organic impurities is discharged from the mother liquor leaving the centrifuge. The liquid is solidified in item X5303 by the addition of burned lime.

### Operation at lower capacity, start-up and shut-down procedure

### Partial load

The plant is very flexible in regard of load fluctuations. The plant throughput can be reduced to approx. 50 % without impairing operation.

### Start-up and shut-down procedures

It is advisable to interrupt the operation by stand-by periods in case of even smaller capacities. For planned short idle periods the steam supply has to be shut off and the vacuum relaxed. All instruction endangered pumps and pipelines must be emptied. Only the re-circulation pumps remain operating to sustain the re-circulation in the crystalliser.

From this standby the plant can be re-started within approximately 2 hours.

Start-up from the cold state takes about 1 shift until the load state is reached.

### Degree of automation

The plant is operated from the control room. The loop controller functions permit automatic operation. Start-up and shutdown of the plant as well as purging of machines, apparatus and pipelines, however, are to be carried out manually.

### Alternative process sequence

The alternative inventive process scheme consists of a feedstock pre-treatment section which serves as conditioning step ensuring stable feedstock conditions for the following crystallisation stages. After pre-treatment of the feedstock the first calcium chloride crystals are formed in a pre-concentration and crude crystallisation section. In the following pure crystallisation section the product is concentrated while the removal of organic impurities mainly takes place in the parallel operating cooling crystallisation section. All crystallisation sections are combined by recycle streams in such a way that a constant calcium chloride quality will be ensured. Further units comprising a granulation, sieving and air treatment section and a packing section for the final calcium chloride product plus solidification equipment for a solids purge complete the inventive process.

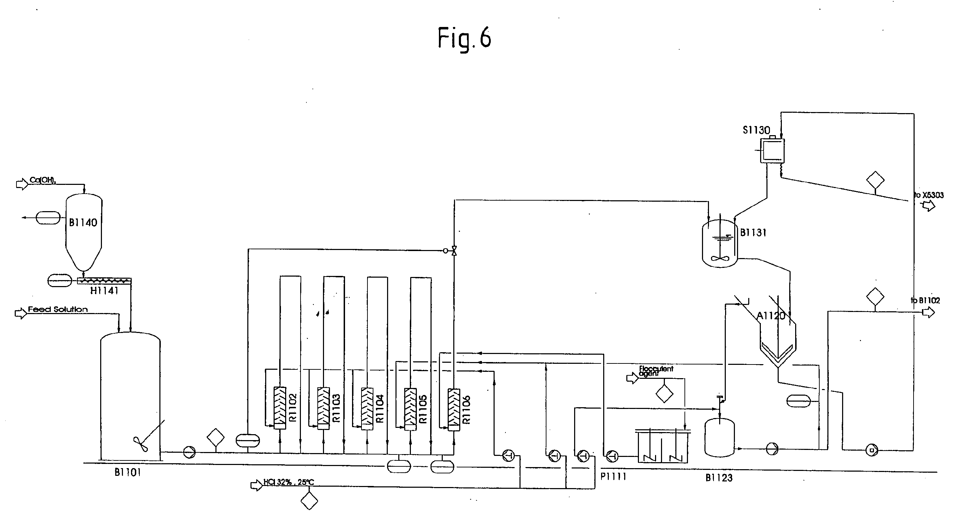

### (Fig. 6) Alternative pre-treatment

The feed solution coming from battery limits is collected in buffer tank B1101 where some lime (Ca(OH)₂) from lime silo B1140 is added via dosing screw H1141. Due to fluctuations in the feedstock composition the flow controlled addition of lime will be an appropriate measure to stabilise and optimise the final product yield.

The non-reacted lime of the conditional feed solution is converted to a large extent to calcium chloride (CaCl₂) by the addition of hydrochloric acid (HCl). As local overdosing immediately leads to dissolution of organic solids and colour formation a multi stage acidification with static mixers R1102 to R1106 is used. Proper reaction control is ensured by the arrangement of the rack-mounted pipes between the mixers.

In case of an ECH plant shut down, this reaction stage can be used to convert surplus hydrochloric acid from other plants with 10-15 % lime to calcium chloride. Thus, in case of several ECH plants the on-stream factor of other plants can be improved.

The feed solution enters the tilted plate settlers A1120 together with a flocculent agent which is added by means of dosing pump P1111. The mixing takes place in static mixer R1106. The flocculent allows to remove a concentrated underflow suspension from the settler in which some sludge storage capacity is provided. Depending on the selected vendor more than one settler unit may be used in parallel service.

The sludge is thickened in decanter centrifuge S1130 and will be further treated within the solidification unit X5303.

The filtrate from the centrifuge is returned to the settler inlet via intermediate storage vessel B1131.

The clarified overflow from settler A1120 is collected in the intermediate storage vessel B1123 where the pH of the solution is being adjusted to neutral/slightly basic. From this vessel the clear solution is passed to the pre-concentration unit buffer tank B1102 which serves as main operating buffer for the calcium chloride recovery plant.

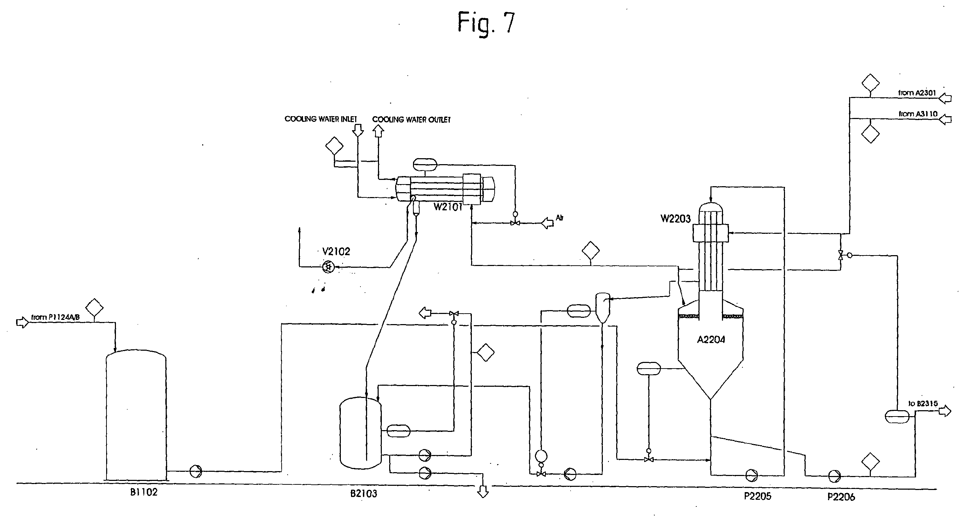

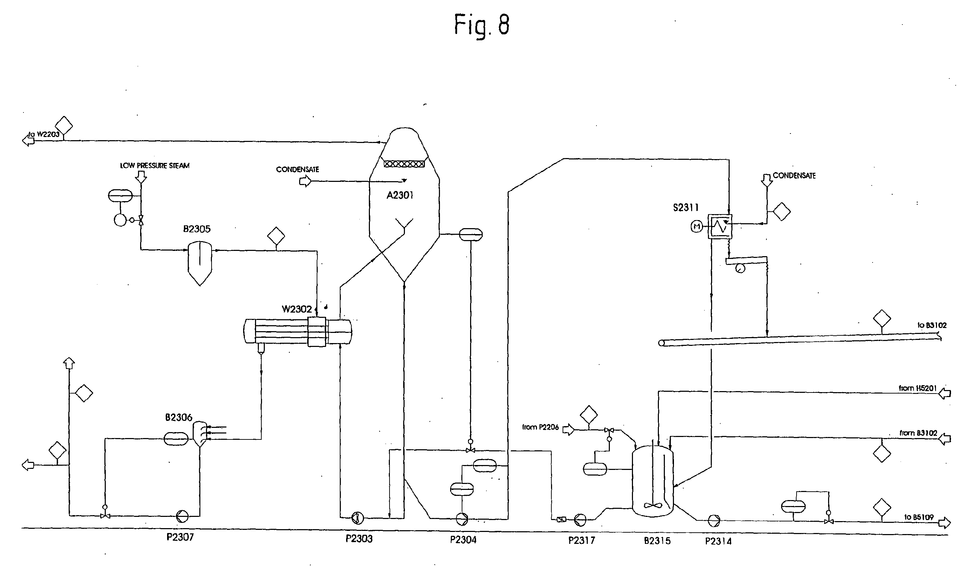

### (Fig. 7 and Fig. 8) Alternative pre-concentration and crude crystallisation

The evaporation is a two-stage system. The first stage is used as pre-concentrator and the second serves as crude crystallisation unit.

In order to ensure that no gypsum precipitation occurs during the pre-concentration this stage is operated at a low temperature using a falling film evaporator W2203 combined with an attached vapour separator A2204. Liquid re-circulation by circulation pump P2205 ensures a constant falling film thickness in the heat exchanger tubes even under changing load conditions in the process. The evaporator is heated by means of vapours from the crude crystalliser A2301 and the vacuum is generated and maintained by water ring vacuum pump V2102.

The liquid is evaporated on the inner tube surfaces in down-flow mode. A special distribution device on the heat exchanger top and sufficient liquid flow ensure an optimum liquid film on the inner tube surfaces. After leaving the heat exchanger, the two phase mixture is entering the vapour separator compartment equipped with a mesh separator. The vapours are guided to the water cooled condenser W2101. The condensate is collected in the condensate tank B2103 and partly returned for inside plant services such as e. g. seal flushing and dissolution of salt. The remainder is sent to battery limits.

After pre-concentration the solution is fed by pump P2206 to the dissolution vessel B2315 in the crude crystallisation section.

In the dissolution vessel B2315 the pre-concentrated liquor is combined with the purge streams from the pure crystallisation (B3102) and the solids reflux from the cooling crystallisation (H5201). The flow is homogenised before being fed to the crystalliser. Sufficient volume hold-up for the dissolution vessel is foreseen to ease the plant operation.

The mixed solution is fed liquor-level controlled to the single-effect crystalliser. The crystalliser is of FC-type (forced circulation) and consists of the vapour separator A2301 with demister, low pressure steam heated heat exchanger W2302, circulation pump P2303 and associated re-circulation lines. The circulation pump is designed to match the best re-circulation for optimum heat exchange and crystal growth.

The liquid is passed through the heat exchanger in upstream flow, thereby taking up heat provided by the shell-side condensation of the saturated live stream (low pressure). The steam condensate is collected in the condensate tank B2306 and charged by the condensate pump P2307 to the live steam inlet for saturation while another stream is utilised in the venturi scrubber F4212 of the granulation section. Surplus condensate will be returned to a boiler house outside battery limits. Heat exchanger W2302 is protected against damages by the droplet eliminator B2305 located in the low pressure steam inlet line.

The heating in the crystalliser loop leads to the evaporation of water. Hence, the solution exceeds the saturation of CaCl₂ and consequently CaCl₂.2H₂O crystallises. The produced suspension is withdrawn by the slurry pump P2304 and directly fed to the centrifuges S2311. The mother liquor and wash liquor with organic impurities are collected in the liquor tank B2315 where these streams are combined with concentrated feed from the pre-concentration (P2206), pure purge from the pure crystallisation (B3102) and a solids stream from the cooling crystallisation (H5201). The liquor of B2315 is returned by pump P2317 partly to the loop of the crude crystallisation A2301 while another part is sent by pump P2314 to the cooling crystallisation section (B5109) for removal of organics.

The released vapours from the crude crystallisation A2301 are used as heating medium in the pre-concentration unit heat exchanger W2203.

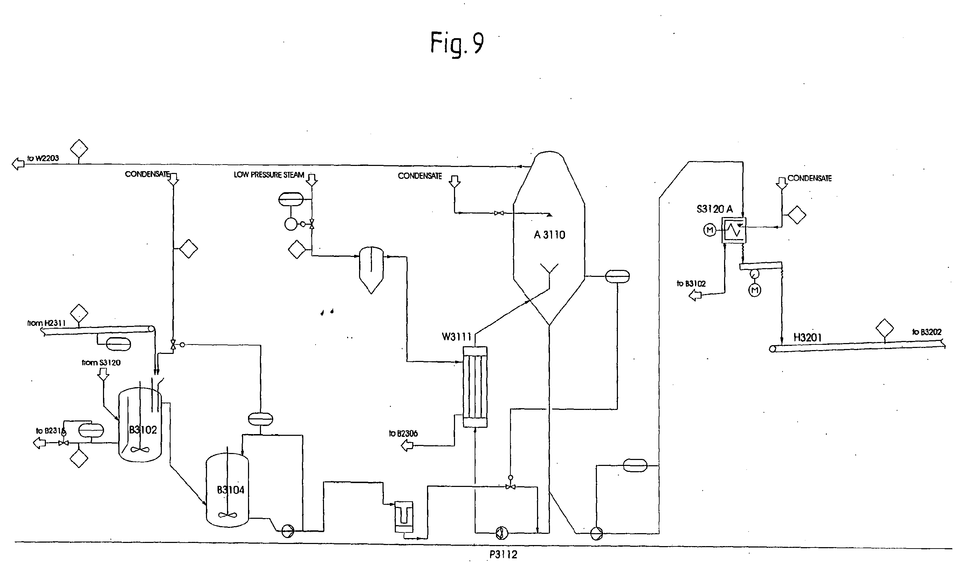

### (Fig. 9) Alternative pure crystallisation

The separated and washed wet crystals from the centrifuges S2311 are conveyed to the dissolution vessel B3102. In this vessel and in the subsequent vessel B3104 the crystals are dissolved in condensate together with recycled mother liquor and passed to the re-crystallisation, the pure crystallisation. This single stage FC-type crystalliser loop comprises the crystalliser A3110, the heat exchanger W3111, the circulation pump P3112 and the associated re-circulation lines.

The re-crystallisation operation is basically identical to the crude crystallisation. The main difference between the two stages is the feed composition to each unit. While the crude crystallisation receives all impurities form the feedstock, almost pure calcium chloride is entering the re-crystallisation. Thus, the reduction of impurities can be improved by order of magnitudes in such two-stage crystalliser arrangement.

The separated and washed wet crystals leaving the re-crystallisation centrifuges S3120 are conveyed by H3201 to the dissolution vessel B3202 where they are mixed with preheated condensate. The temperature is controlled by a liquid recycle using the steam heated heat exchanger W3206. The temperature is controlled by a liquid recycle using the steam heated heat exchanger W3206 and pump P3204A. Pump 3204B charges the solution with 55-60 % calcium chloride to the injection system of the granulator A4201 after being heated up in heat exchanger W3205.

If intended direct production of liquid calcium chloride with a typical concentration of 30-40 % is possible directly from the outlet of this dissolution vessel B3202.

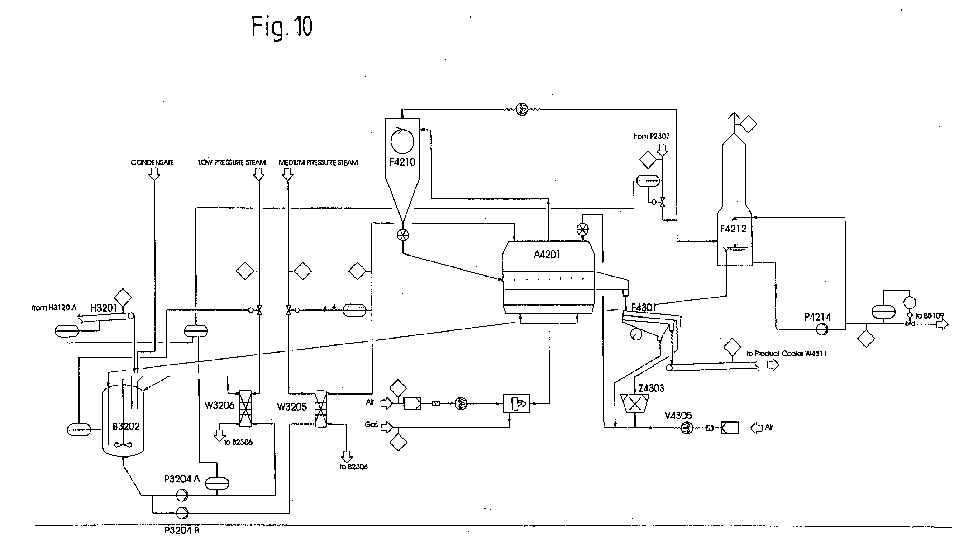

### (Fig. 10) Alternative granulation, cooling, sieving and air treatment

The solution from pumps P3204 is injected into the high temperature fluidised bed of the granulator A4201. Here a complex process of fines agglomeration combined with calcium chloride solution coating takes place to form spherical granules. In this process the granules are calcined to either >94 % calcium chloride or >77 % calcium chloride.

The exhaust gas from the fluidised bed granulator is passing a cyclon separator F4210 and a subsequent venturi scrubber F4212 for almost complete dust removal. The solution from the wet scrubber is mainly passed to intermediate tank B5109 of the cooling crystallisation section while the venturi scrubber bottoms overflow is routed is to dissolution vessel B3202. The solids from the cyclone are fed back to the fluidised bed of the granulator.

The granules are leaving the fluidised bed granulator via sieve F4301 where oversize and undersize granules are removed and recycled pneumatically by blower V4305. Oversized granules will additionally be crushed by lump crusher Z4303. The on-spec fraction granules from the sieve are sent to the packing section .

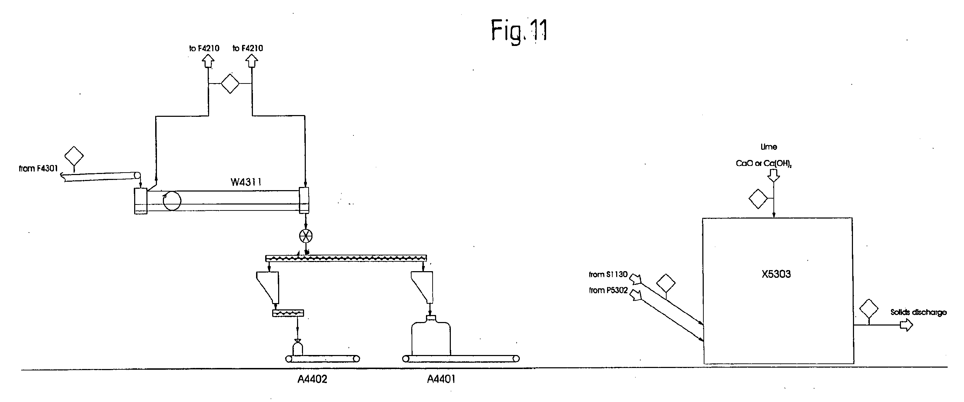

### (Fig. 11) Alternative cooling and packing

The final product is conveyed via product cooler W4311 to either an automatic big bag packing station A4401 or an automatic bag packing and palletising system A4402. Due to the hydroscopic character of the product the direct packaging without any intermediate silo storage is to be considered.

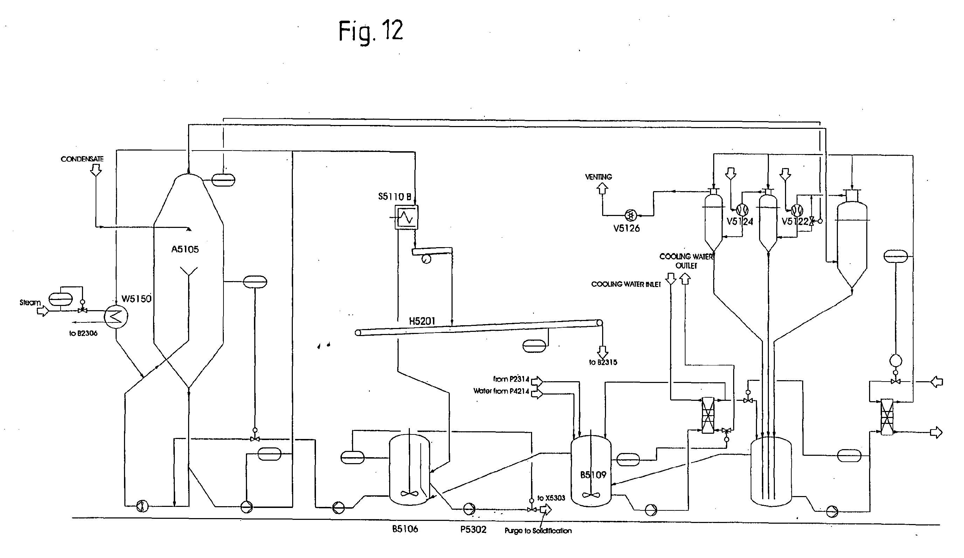

### (Fig. 12) Alternative cooling crystallisation

The crude purge from the crude crystallisation (P2314) and the venturi scrubber purge from the granulation section (P4214) are passed to the intermediate tank B5109 which serves as feed storage for the cooling crystallisation loop. The crystallisation loop itself consists of the feed tank B5106, the FC-type crystalliser A5105, centrifuges S5110 and further circulation pumps. The steam heated heat exchanger W5150 is used for start-up purposes and special modes of operation.

As the cooling crystallisation needs to separate an organic rich purge product a deep vacuum is needed to perform this process step at low temperature. Vacuum equipment comprising steam ejectors V5122, V5124 and liquid ring pump V5126 are provided for this purpose.

The organic rich purge stream is being removed from a compartment of the feed tank B5106 which receives also filtrate from the centrifuges X5110. This stream is sent to the solidification equipment X5303. The other part from the centrifuges is recycled to the crude crystallisation section (B2315).

### Operation at lower capacity, start-up and shut-down procedure

The inventive process will be flexible with regard to load fluctuations. The process throughput can be reduced to approx. 50 % without impairing operation. It is advisable to interrupt the operation by stand-by periods in case of even lower plant capacity will occur.

For planned short idle periods the steam supply has to be shut off and the vacuum can be relaxed. All incrustation endangered pumps and pipelines must be emptied. Only the re-circulation pumps remain in operation to maintain the re-circulation in the crystallisers. From such shutdown the plant can be re-started within approx. two hours. Start-up from the cold state will take around on shift until full load state is reached.

A plant according to the inventive process is operated from a control room. The loop controller functions permit automatic operation. Start-up and shutdown of the plant as well as purging of machines, apparatuses and pipelines, however, are to be carried out manual mode.

## Claims

1. Process for recovering calcium chloride from purge water of the production process of epichlorhydrine, **characterised by** the subsequent steps:
pre-treatment,
pre-concentration and crude crystallisation and
pure crystallisation.

2. Process according to claim 1, wherein the pre-treatment comprises the mixing of purge water obtained by the production process of epichlorhydrine with lime and a coagulating agent.

3. Process according to one of the claims 1 and 2, whereas the solution of organic solids and colour formation is controlled by the adding of hydrochloride acid in a static mixer.

4. Process according to one of the claims 1 to 3, wherein the pre-concentration and crude crystallisation comprises a two-stage system comprising a falling film evaporator or equivalent and a force circulated crystalliser.

5. Process according to one of the claims 1 to 4, wherein the pure crystallisation comprises a mean for re-crystallisation of the obtained crude calcium chloride re-dissolved in condensate and recycled mother liquor.

6. Process according to one of the claims 1 to 5, wherein the pure calcium chloride is melted in a melting step and wherein the melted calcium chloride is granulated and calcinated in a drum-dryer.

7. Process according to claim 6, wherein the drum-dryer is gas-heated.

8. Process according to one of the claims 1 to 7, wherein the concentrated purge streams containing the main part of glycerol and other organic impurities are solidified by addition of burned lime.

9. Process according to one of the claim 1, wherein the pure calcium chloride is granulated, sieved and air treated in a granulation, sieving and air treatment step after the pure crystallisation.

10. Process according to claim 9, wherein the granulation, sieving and air treatment step comprises a venturi scrubber for removing the dust obtained in this step.

11. Process according to one of the claims 1 to 11, wherein the process comprises the additional step of a cooling crystallisation.

12. Process according to claim 11, wherein the purge from the pure crystallisation and the purge from the venturi scrubber are fed to the cooling crystallisation.

13. Process according to one of the claims 1 to 12, wherein the pure recrystallised calcium chloride is granulated by use of a fluidised bed granulator.
